(19) **Europäisches Patentamt**

**European Patent Office**

**Office européen des brevets**

(11) **EP 0 807 562 B1**

(12) **EUROPÄISCHE PATENTSCHRIFT**

(45) Veröffentlichungstag und Bekanntmachung des Hinweises auf die Patenterteilung:
**04.06.2003  Patentblatt 2003/23**

(51) Int Cl.$^7$: **B60T 8/00**

(21) Anmeldenummer: **97104339.3**

(22) Anmeldetag: **14.03.1997**

(54) **Verfahren zur Giermoment-Abschwächung bei einem Antiblockiersystem**

Procedure to reduce the yaw torque in an anti-lock system

Procédé pour affaiblir le moment de giration dans un système antiblocage

(84) Benannte Vertragsstaaten:
**DE FR SE**

(30) Priorität: **14.05.1996  DE 19619381**

(43) Veröffentlichungstag der Anmeldung:
**19.11.1997  Patentblatt 1997/47**

(73) Patentinhaber: **WABCO GmbH & Co. OHG**
**30453 Hannover (DE)**

(72) Erfinder:
• **Koschorek, Ralf**
**30449 Hannover (DE)**

• **Rosendahl, Hartmut**
**30167 Hannover (DE)**
• **Rothen, Johann**
**Verstorben (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
**DE-A- 3 626 753     DE-A- 3 840 564**
**DE-A- 3 925 828     DE-A- 4 441 624**

**Beschreibung**

Die Erfindung bezieht sich auf ein Verfahren zur Giermoment-Abschwächung bei einem Antiblockiersystem in einem Fahrzeug gemäß dem Oberbegriff des Patentanspruchs 1.

Bei einer stärkeren Abbremsung eines Fahrzeugs auf einer Fahrbahn, welche seitenweise unterschiedliche Reibwerte aufweist, entsteht bekanntlich ein Giermoment, welches das Fahrzeug in Richtung auf die Straßenseite mit dem höheren Reibwert hin abzulenken versucht. Diesem Effekt muß der Fahrer durch Gegenlenken begegnen. Dies kann jedoch für ungeübte Fahrer problematisch sein, insbesondere dann, wenn das Giermoment durch ungünstige Umstände besonders hoch ausfällt. Solche Umstände können z. B. ein kurzer Radstand des Fahrzeugs, eine geringe Beladung, besonders stark unterschiedliche Straßenverhältnisse wie z. B. Beton gegenüber Eis, und auch besonders starke Bremsmanöver, wie z. B. eine Bremsung mit regelndem Antiblockiersystem (ABS) sein.

Insbesondere bei mit einem ABS ausgerüsteten Fahrzeugen ist es deshalb bereits bekannt, das bei einer Bremsung auf einer Straße mit rechts-links ungleichen Reibwerten (µ-Split) entstehende Giermoment zunächst zeitlich verzögert aufzubauen und dann auf einen konstanten Wert zu begrenzen und damit die Stabilität des Fahrzeugs zu erhöhen und somit den Fahrer zu entlasten. Dies geschieht durch besondere Maßnahmen innerhalb der Elektronik des ABS (DE-OS 28 55 326).

Neuerdings sind Fahrzeuge mit elektronischem Bremssystem (EBS) bekannt, bei denen ein von einem Bremswertgeber stammender Sollwert als Bremsdruck in den Bremszylindern (Istwert) einregelbar ist (DE-OS 44 06 235). Auch diese Bremssysteme sind in der Regel mit einem ABS ausgestattet. Da hier zur Erfassung der Bremsdrücke Drucksensoren zur Verfügung stehen, ist es bereits bekannt, die gemessenen Druckdifferenzen zwischen dem Low-Rad auf der glatten Straßenseite und dem High-Rad auf der griffigen Straßenseite zu begrenzen und hiermit eine Giermoment-Abschwächung zu erzielen (DE-OS 24 60 309). Dabei kann das High-Rad unter Wahrung einer zweckmäßigen mittleren Druckdifferenz ($\Delta P$) vom regelnden Low-Rad druckmäßig mitgesteuert werden, oder auch auf einem konstanten Druck gehalten werden.

Aus der gattungsbilden den DE-A- 39 25 828 ist schließlich weiter bekannt, bei einem Antiblockierregelsystem mit einer Giermomenten-Aufbauverzögerung die zugelassene Druckdifferenz zwischen den Räder einer Achse abhängig vom Reibwertunterschied der linken und der rechten Straßenseite auszubilden. Hierbei ist die Druckdifferenz insbesondere abhängig von der Höhe des niedrigeren Reibwertes auf der glatten Straßenseite. Bei Überschreitung dieser Druckdifferenz wird auch am High-Rad Bremsdruck abgebaut.

Nachteilig an den bekannten Anordnungen ist nun, daß die Giermoment-Abschwächung, nicht auf das jeweilige Fahrzeug abgestimmt ist. Der maximal zugelassene Bremsdruck des High-Rades ist nach dem zeitlich verzögertem Aufbau von dem durch die Reibkraft des Low-Rades bestimmten Bremsverlauf des Low-Rades abhängig und somit begrenzt. Hierdurch wird die für ein beherrschbares Fahrzeugverhalten maximal zulässige Bremskraft des High-Rades nicht immer ausreichend ausgenutzt. Es ist gegebenenfalls möglich, daß durch eine zu starke Unterbremsung des High-Rades etwas an Bremsweg verschenkt wird. Es ist ebenfalls möglich, daß die Bremsdruckdifferenz ($\Delta P$) für kritische Fahrzeuge zu hoch ist, so daß diese vom Fahrer bei Bremsungen mit µ-Split-Reibwerten nicht oder nur schwer beherrschbar sind.

Der Erfindung liegt die Aufgabe zugrunde, ein Verfahren zur Giermoment-Abschwächung bei einem Fahrzeug mit Antiblockiersystem anzugeben, welches einerseits den Fahrer von einem übermäßigen Gegenlenken entlastet; und andererseits den Bremsweg gegenüber den bekannten Systemen verkürzt.

Diese Aufgabe wird durch die im Patentanspruch 1 enthaltene Erfindung gelöst. Die Unteransprüche enthalten zweckmäßige Weiterbildungen.

Durch die Anwendung des erfindungsgemäßen Verfahrens ist eine Giermoment-Abschwächung möglich, die sich den wechselnden Fahrzeug-Typen bzw. - Beladungen selbständig anpaßt und damit zur Verkürzung des Gesamt-Bremsweges im Vergleich zu bekannten Verfahren beiträgt. Die Beherrschbarkeit des Fahrzeugs auf µ-Split-Fahrbahnen bleibt dabei erhalten.

Die Erfindung wird im folgenden anhand einer Zeichnung näher erläutert.

Dabei zeigen

Fig. 1    ein schematisches Blockschaltbild eines elektronischen Bremssystems (EBS) mit integriertem Antiblockiersystem (ABS);

Fig. 2    ein Diagramm, in welchem die Bremsdrücke ($P_B$) eines Low-Rades und eines High-Rades der Lenkachse über der Zeit (t) aufgetragen sind.

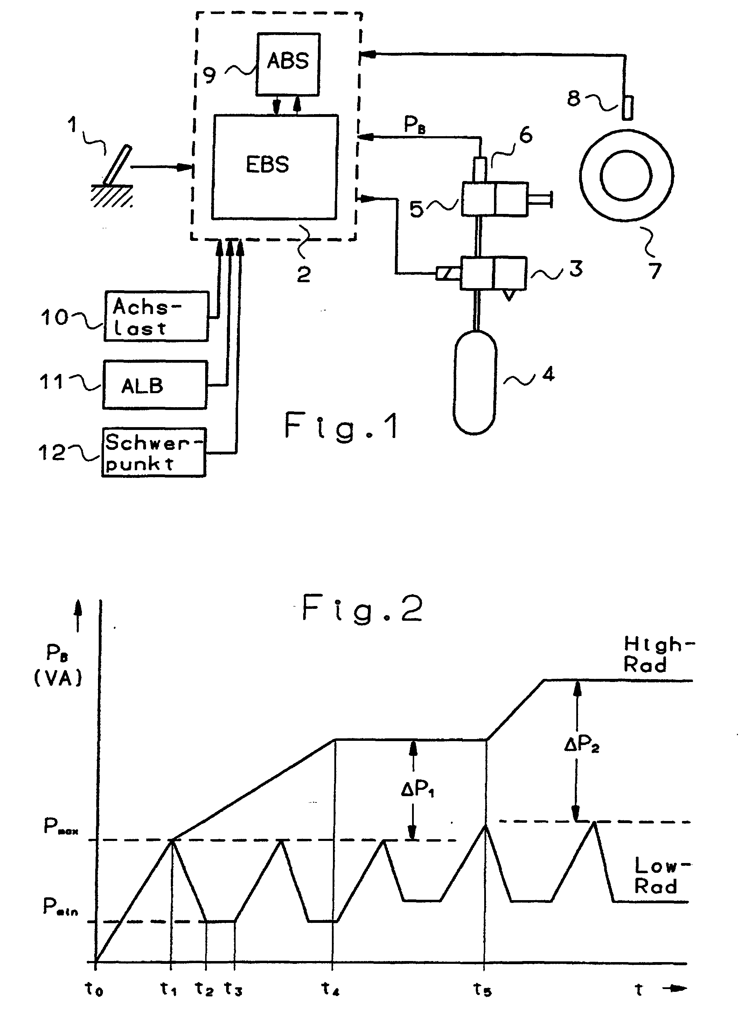

In der Fig. 1 ist zur Erläuterung des Erfindungsgedankens ein elektronisches Bremssystem (EBS) mit integriertem ABS schematisch als Blockschaltbild dargestellt. Die Erfindung ist aber auch bei einem konventionellen Bremssystem mit ABS anwendbar.

Ein Bremswertgeber (1) mit elektrischem Signalausgang ist an einen Regler (2) angeschlossen. Der vom Bremswertgeber (1) stammende Bremsdruck-Sollwert wird im Regler (2) mit einem Bremsdruck-Istwert verglichen, welcher von einem Drucksensor (6) in einem Bremszylinder abgefühlt wird, und dem Regler (2) als Bremsdruck ($P_B$) zurückgemeldet wird. Der Drucksensor (6) kann auch in einem Regelventil (3) an-

Die jeweilige Regelabweichung wird mittels des vom Regler (2) angesteuerten Regelventils (3), welches an einen Druckluftvorratsbehälter (4) angeschlossen ist, ausgeglichen. Mittels des genannten, vorzugsweise stetig arbeitenden Regelventils (3) ist es möglich, den Druck im Bremszylinder (5) auf jeden gewünschten Wert von Null bis zum Behälterdruck im Druckluftvorrat einzustellen.

Das dem Bremszylinder (5) zugeordnete Fahrzeugrad (7) ist mit einem Drehzahlsensor (8) versehen. Dieser ist an eine ABS-Elektronik (9) angeschlossen. Die beiden Elektroniken des EBS (2) und des ABS (9) können über Verbindungsleitungen Daten austauschen, oder aber das ABS ist als ein in das EBS integrierter Bestandteil ausgeführt.

Falls die ABS-Elektronik (9) ein drohendes Blockieren des Rades (7) erkennt, gibt sie entsprechende Signale zum Regler (2), wodurch dieser veranlaßt wird, den zu hohen Bremsdruck abzusenken. Hierdurch wird das Rad vom Bremsdruck entlastet und erhält Gelegenheit, wieder anzulaufen. Sobald sich die Radgeschwindigkeit wieder der Fahrzeuggeschwindigkeit angeglichen hat, kann das Rad wieder mit Bremsdruck beaufschlagt werden. Hierdurch ergeben sich Bremsdruck-Regelzyklen, die im Durchschnitt eine Frequenz von etwa 1 Hz aufweisen.

An die Elektroniken der Bauelemente (2) oder (9) sind weiter ein oder mehrere Achslastsensoren (10) angeschlossen. Hierdurch erhalten die Elektroniken eine Information über die Beladung des Fahrzeugs.

Weiter ist angeschlossen ein ALB-Sensor (11) (ALB = automatisch lastabhängige Bremse). Auch dieser gibt ein Signal über die Beladung des Fahrzeugs ab.

Schließlich ist angeschlossen eine Einheit (12), welche eine Information über die Schwerpunktshöhe des Fahrzeugs abgibt. Dies kann ein Potentiometer oder eine Tastatur sein, mit deren Hilfe der Fahrer eine Schätzung des Schwerpunkts eingeben kann. Es kann aber auch eine Elektronik sein, welche den Schwerpunkt selbständig ermittelt, z. B. aus der Achslastverlagerung beim Bremsen.

In der Fig 2 ist ein Diagramm dargestellt, in welchem über der Zeit (t) die Bremsdrücke (P_B) der beiden Räder der Lenk- bzw. Vorderachse (VA) aufgetragen sind. Wie man erkennt, steigert sich der Bremsdruck ausgehend vom Zeitpunkt ($t_0$), dem Beginn der Bremsung, zunächst für beide Räder der Vorderachse, nämlich dem auf der griffigen Straßenseite laufenden High-Rad und dem auf der glatten Straßenseite laufenden Low-Rad, gleichartig. Zum Zeitpunkt $t_1$ erkennt das ABS (9) eine Blockierneigung des Low-Rades und veranlaßt eine Bremsdruckabsenkung im Bremszylinder des Low-Rades, die bis zum Zeitpunkt $t_2$ andauert. Der Bremsdruck zum Zeitpunkt $t_1$ ist der sogenannte Abregeldruck ($P_{max}$). Es schließt sich eine Druckhaltephase für das Low-Rad an, bis im Zeitpunkt ($t_3$) mit einer erneuten Drucksteigerung beim Low-Rad ein neuer Regelzyklus beginnt.

Währenddessen steigt der Bremsdruck im High-Rad weiter an, bis er durch die erfindungsgemäße Giermoment-Abschwächung im Zeitpunkt ($t_4$), sobald nämlich eine mittlere Bremsdruckdifferenz ($\Delta P$) zum Low-Rad erreicht ist, konstant gehalten wird. Dieser Anstieg kann, wie hier dargestellt, schon durch entsprechende Signale die das ABS (9) dem Regler (2) überträgt, zeitlich verzögert werden, um den Giermomentaufbau bei Bremsbeginn zu verlangsamen. Die Bremsdruckdifferenz ($\Delta P$) ist hier als Abstand zum Abregeldruck ($P_{max}$) des Low-Rades dargestellt. Sie könnte aber auch als Abstand zu einem mittleren Bremsdruck des Low-Rades, z. B. ($P_{max} + P_{min}$)/2($P_{min}$ = Haltedruck) oder als Abstand zum jeweils vorliegenden Bremsdruck des Low-Rades definiert sein.

Die Druckdifferenz ($\Delta P$) ist erfindungsgemäß abhängig von bestimmten äußeren Parametern, wodurch bestimmte Daten des Fahrzeugs für die Giermomentenabschwächung berücksichtigt werden.

Die zugelassene Druckdifferenz ($\Delta P$) welche von der ABS-Elektronik (9) oder auch vom Regler (2) berechnet wird, wird zum Einen abhängig gemacht vom Straßenreibwert μ. Hierdurch wird der Tatsache Rechnung getragen, daß auf griffiger Straße ein Giermoment durch den Fahrer leichter beherrschbar bzw. durch Gegenlenken ausgleichbar ist. Aus diesem Grunde kann der Algorithmus für die Berechnung von $\Delta P$ auf griffigen Straßen so ausgebildet werden, daß eine höhere Druckdifferenz erlaubt ist, als auf glatten Straßen. Der Straßenreibwert μ kann qualitativ am einfachsten mit einem geeigneten Verfahren aus den jeweiligen Abregeldrücken $P_{max}$ bestimmt werden.

In der Fig. 2 ist erkennbar, daß ab dem Zeitpunkt $t_5$ die Abregeldrücke $P_{max}$ ansteigen, also die Straßenverhältnissen sich verbessern. Aus diesem Grund steigt auch ab $t_5$ die zugelassene Druckdifferenz $\Delta P$ von $\Delta P_1$ auf $\Delta P_2$.

Eine weitere Größe, die in den Algorithmus zur Berechnung der Druckdifferenz $\Delta P$ eingeht, ist die Beladung des Fahrzeugs. Diese kann aus Achslastsensoren (10) oder einem ALB-Sensor (11) abgeleitet werden.

Eine weitere kritische Größe ist die Schwerpunktshöhe des Fahrzeuges. Diese ist bekanntlich insbesondere bei Nutzfahrzeugen stark von der jeweiligen Beladung abhängig. Die Schwerpunkthöhe kann durch die Einheit (12) in den Regler (2) eingegeben werden.

Weitere für das Giermoment wichtige Größen sind der Radstand und die Spurweite des Fahrzeugs.

Der Algorithmus zur Berechnung der zugelassenen Druckdifferenz $\Delta P$ wird nun erfindungsgemäß so gewählt, daß sich mit der Beladung und dem Radstand des Fahrzeugs die zugelassene Druckdifferenz $\Delta P$ erhöht. Diese genannten Größen führen nämlich erfahrungsgemäß und auch theoretisch nachweisbar zu einer besseren Beherrschbarkeit des Fahrzeugs in Situationen, in denen Giermomente entstehen.

Dagegen ist der Algorithmus so ausgelegt, daß sich mit der Höhe des Schwerpunktes und der Spurweite des Fahrzeugs die zugelassene Druckdifferenz $\Delta P$ verringert, da erfahrungsgemäß und theoretisch nachweisbar diese beiden Größen die Beherrschbarkeit des Fahrzeugs in μ-Split-Situationen erschweren.

Der bereits erwähnte Straßenreibwert μ kann zweckmäßigerweise berechnet werden nach der Formel:

$$\mu = c \times P_{max} / F_N,$$

worin

μ = Straßenreibwert,
c = Konstante,
$P_{max}$ = ABS-Abregeldruck eines Rades der Hinterachse,
$F_N$ = Last eines Rades der Hinterachse

Weiter kann die Beladung des Fahrzeugs bestimmt werden aus dem Signal des ALB-Sensors (11) oder den Signalen von Achslastsensoren (10) an der Hinterachse des Fahrzeugs.

Die Schwerpunktshöhe des Fahrzeugs kann zum einen durch den Fahrer abgeschätzt werden und den Elektroniken von EBS (2) oder ABS (9) mittels der Einheit (12), welche beispielsweise eine Tastatur aufweist, eingegeben werden.

Es ist aber auch möglich, die Schwerpunkthöhe des Fahrzeugs von der Einheit (12) selbständig berechnen zu lassen. Dies ist beispielsweise möglich aus den Signalen der Achslastsensoren (10), wenn zusätzlich Straßensteigungen und/oder Beschleunigungen des Fahrzeugs mit ausgewertet werden. Die auf Steigungen oder bei Beschleunigungen bzw. Verzögerungen entstehenden Nickbewegungen des Fahrzeugs sind in etwa der Schwerpunktshöhe proportional.

Schließlich ist es zweckmäßig, die Größen Radstand, Spurweite und Leergewicht des Fahrzeugs den Regler (2) oder der ABS-Elektronik (9) einmalig vor Inbetriebnahme des Fahrzeugs einzuprogrammieren. Diese Größen stehen somit auch zu der erfindungsgemäßen Berechnung der zugelassenen Druckdifferenz $\Delta P$ zur Verfügung.

Die oben beschriebene Erfindung ist selbstverständlich auch bei Fahrzeugen mit mehr als nur einer Lenkachse oder mehr als nur einer Hinterachse entsprechend anwendbar. Sie ist ebenfalls anwendbar bei Anti-Giermoment-Systemen, bei denen die Druckhöhe des High-Rades nicht in Stufen konstant gehalten wird (siehe Fig. 2), sondern synchrone Druckzyklen entsprechend den Druckzyklen des Low-Rades auch beim High-Rad erzeugt werden (nicht dargestellt).

## Patentansprüche

1. Verfahren zur Giermoment-Abschwächung bei einem Antiblockiersystem (ABS) in einem Fahrzeug, wobei während einer ABS-geregelten Bremsung die Bremsdrücke ($P_B$) der einzelnen Räder (7) derart gesteuert oder geregelt werden, daß zwischen den Bremsdruckverläufen am High-Rad und am Low-Rad mindestens der Lenkachse eine zugelassene Druckdifferenz ($\Delta P$) im Mittel nicht überschritten wird, wobei die zugelassene Druckdifferenz ($\Delta P$) von einer Elektronik (2 oder 9) berechnet wird in Abhängigkeit vom Straßenreibwert, **dadurch gekennzeichnet, daß** die Berechnung zusätzlich die Beladung, und/oder die Schwerpunktshöhe, und/oder den Radstand, und/oder die Spurweite des Fahrzeugs berücksichtigt, und zwar derart, daß der Algorithmus der Berechnung derart gewählt wird, daß sich mit der Beladung und dem Radstand des Fahrzeugs die zugelassene Druckdifferenz ($\Delta P$) erhöht, während sich mit der Schwerpunktshöhe und der Spurweite des Fahrzeugs die zugelassene Druckdifferenz ($\Delta P$) verringert.

2. Verfahren nach Anspruch 1, **dadurch gekennzeichnet, daß** der Straßenreibwert (μ) berechnet wird nach der Formel

$$\mu = c \times P_{max} / F_N,$$

worin

μ = Straßenreibwert
c = Konstante
$P_{max}$ = ABS-Abregeldruck eines Rades der Hinterachse
$F_N$ = Last eines Rades oder beider Räder der Hinterachse

3. Verfahren nach Anspruch 1, **dadurch gekennzeichnet, daß** die Beladung des Fahrzeugs bestimmt wird aus dem Signal eines ALB-Sensors (11) oder den Signalen von Achslastsensoren (10).

4. Verfahren nach Anspruch 1, **dadurch gekennzeichnet, daß** die Schwerpunktshöhe des Fahrzeugs durch den Fahrer geschätzt wird und der EBS-Elektronik (2) oder der ABS-Elektronik (9) mittels einer Einheit (12) eingegeben wird.

5. Verfahren nach Anspruch 1, **dadurch gekennzeichnet, daß** die Schwerpunktshöhe des Fahrzeugs von der Einheit (12) selbständig berechnet wird.

6. Verfahren nach Anspruch 1, **dadurch gekennzeichnet, daß** der Radstand, die Spurweite und das Leergewicht des Fahrzeugs der EBS-Elektronik (2) oder der ABS-Elektronik (9) einmalig vor Inbetriebnahme des Fahrzeugs einprogrammiert werden.

## Claims

1. Method for yaw moment attenuation in an anti-lock braking system (ABS) in a vehicle, wherein the brake pressures ($P_B$) of the individual wheels (7) are so regulated or controlled during ABS-controlled braking that a permitted pressure difference ($\Delta P$) between the brake pressure values at the high wheel and at the low wheel of at least the steering axle is, on average, not exceeded, the permitted pressure difference ($\Delta P$) being calculated by an electronic unit (2 or 9) in dependence upon the road friction value, **characterised in that** the calculation additionally takes into account the loading, and/or the height of the centre of gravity, and/or the wheelbase, and/or the wheel gauge of the vehicle, and more specifically in such a manner that the algorithm of the calculation is so selected that the permitted pressure difference ($\Delta P$) increases with the loading and the wheelbase of the vehicle, whereas the permitted pressure difference ($\Delta P$) decreases with the height of the centre of gravity and the wheel gauge of the vehicle.

2. Method according to claim 1, **characterised in that** the road friction value ($\mu$) is calculated according to the formula

$$\mu = c \times P_{max} / F_N,$$

wherein

$\mu$ = road friction value
$c$ = constant
$P_{max}$ = ABS limit pressure of a wheel of the rear axle
$F_N$ = load on a wheel or on both wheels of the rear axle.

3. Method according to claim 1, **characterised in that** the loading of the vehicle is determined from the signal of an ALB sensor (11) or from the signals of axle load sensors (10).

4. Method according to claim 1, **characterised in that** the height of the centre of gravity of the vehicle is estimated by the driver and is input into the EBS electronic unit (2) or the ABS electronic unit (9) by means of a unit (12).

5. Method according to claim 1, **characterised in that** the height of the centre of gravity of the vehicle is calculated automatically by the unit (12).

6. Method according to claim 1, **characterised in that**, before the vehicle is taken into operation, there is one-off programming, into the EBS electronic unit (2) or the ABS electronic unit (9), of the wheel base, the wheel gauge and the empty weight of the vehicle.

## Revendications

1. Procédé pour amortir le moment de giration dans un système d'antiblocage (ABS) dans un véhicule, dans lequel les pressions de freinage ($P_B$) des roues individuelles (7) sont commandées ou régulées pendant un freinage régulé avec antiblocage de telle sorte que, entre les évolutions des pressions de freinage au niveau de la roue correspondant au coefficient de friction plus faible (roue "low") et au niveau de la roue correspondant au coefficient de friction plus élevé (roue "high") de l'essieu directeur, au moins une différence de pression admise ($\Delta P$) n'est pas dépassée en moyenne, la différence de pression admise ($\Delta P$) étant calculée par une unité électronique (2 ou 9) en fonction du coefficient de friction de la route, **caractérisé en ce que** le calcul prend en compte en supplément la charge et/ou la hauteur du centre de gravité et/ou l'empattement et/ou l'écartement des roues du véhicule, et ceci de telle sorte que l'algorithme du calcul est ainsi choisi que la différence de pression admise ($\Delta P$) augmente avec la charge et avec l'empattement du véhicule, tandis que la différence de pression admise ($\Delta P$) diminue avec la hauteur du centre de gravité et avec l'écartement des roues du véhicule.

2. Procédé selon la revendication 1, **caractérisé en ce que** le coefficient de friction de la route ($\mu$) se calcule suivant la formule :

$$\mu = c \times P_{max} / F_N$$

dans laquelle :

$\mu$ = coefficient de friction de la route,
$c$ = constante,
$P_{max}$ = pression de régulation avec antiblocage d'une roue de l'essieu amère, et
$F_N$ = charge d'une roue ou des deux roues de l'essieu arrière.

3. Procédé selon la revendication 1, **caractérisé en ce que** la charge du véhicule est déterminée à partir du signal d'un détecteur (11) pour commande automatique du freinage en dépendance de la charge ou à partir des signaux de détecteurs de charge d'essieu (10).

4. Procédé selon la revendication 1, **caractérisé en ce que** la hauteur du centre de gravité du véhicule est estimée par le conducteur et entrée dans l'unité électronique (2) du système de freinage électronique ou dans l'unité électronique (9) du système de freinage antiblocage au moyen d'une unité (12).

5. Procédé selon la revendication 1, **caractérisé en ce que** la hauteur du centre de gravité du véhicule est calculée automatiquement par l'unité (12).

6. Procédé selon la revendication 1, **caractérisé en ce que** l'empattement, l'écartement des roues et le poids à vide du véhicule sont programmés une seule fois dans l'unité électronique (2) du système de freinage électronique ou dans l'unité électronique (9) du système de freinage antiblocage avant de mettre en servie le véhicule.

Fig.1

Fig.2